(19) Europäisches Patentamt
European Patent Office
Office européen des brevets

(11) Veröffentlichungsnummer: **0 032 397**
**A1**

(12) **EUROPÄISCHE PATENTANMELDUNG**

(21) Anmeldenummer: 81100168.4

(51) Int. Cl.³: **G 02 F 1/133**

(22) Anmeldetag: 12.01.81

(30) Priorität: 14.01.80 DE 3001125

(43) Veröffentlichungstag der Anmeldung: 22.07.81 Patentblatt 81/29

(84) Benannte Vertragsstaaten: FR GB IT

(71) Anmelder: SIEMENS AKTIENGESELLSCHAFT Berlin und München
Postfach 22 02 61
D-8000 München 22(DE)

(72) Erfinder: Bernhardt, Jörg, Dipl.-Chem.
Annette-Kolb-Anger 3
D-8000 München 83(DE)

(54) **Verfahren zur Herstellung einer Flüssigkristallanzeige.**

(57) Es wird die Orientierungsschicht einer Flüssigkristallanzeige aus einer zinnorganischen Verbindung des Typs $R_nSnX_{4-n}$ (R = organischer Rest, X = reaktive Abgangsgruppe, n = 1, 2 oder 3) erzeugt. Vorzugsweise ist der organische Rest ein Alkyl und besteht die reaktive Abgangsgruppe aus Chlor. Zweckmäßigerweise wird die Schicht in einem Tauchverfahren aufgebracht, bei dem man die Verbindung in einem organischen Lösungsmittel löst, anschließend die Lösung auf die Trägerplatte bringt und dann bei leicht erhöhten Temperaturen trocknet. Die so erhaltene Orientierungsschicht ist stabil, haftet fest an ihrer Unterlage und gibt den angrenzenden Flüssigkristallmolekülen einen definierten Anstellwinkel, dessen Größe von der zinnorganischen Verbindung sowie der Flüssigkristallsubstanz abhängt und zwischen 20° und 90° liegen kann. Kleinere Kippwinkel erhält man, wenn man die Orientierungsschicht reibt. Die Schichten können durch Dotierung und anschließende Pyrolyse elektrisch leitend gemacht werden. Somit lassen sich transparente Elektroden und Orientierungsschichten auf sehr ähnliche Weise erzeugen.

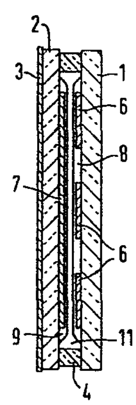


EP 0 032 397 A1

SIEMENS AKTIENGESELLSCHAFT
Berlin und München

Unser Zeichen:
VPA 80 P 1004 E

Verfahren zur Herstellung einer Flüssigkristallanzeige.

Die Erfindung bezieht sich auf ein Verfahren gemäß dem Oberbegriff des Anspruchs 1. Eine derartige Fertigungstechnik, bei der die Orientierungsschicht aus einem Silan mit einem Alkylrest und einer hydrolysierbaren Gruppe erzeugt wird, ist aus der DE-OS 22 38 429 bekannt.

Die Silanisierung gehört zu den wenigen Orientierungstechniken, die über das Experimentierstadium hinausgekommen sind und praktische Bedeutung erlangt haben. Denn Silanschichten sind relativ stabil und haftfest, liefern definierte Flüssigkristalltexturen und lassen sich vor allem, verglichen mit anderen gängigen Ausrichtverfahren wie etwa der Schrägbedampfung, relativ einfach herstellen. Man braucht lediglich das Silan in Wasser zu lösen, die Lösung aufzutragen und anschließend zu trocknen. Dieser Fertigungsvorteil fällt jedoch nicht allzusehr ins Gewicht, wenn man die Trägerplattenbeschichtung insgesamt betrachtet: Gewöhnlich trägt die Platte vier Schichten, eine Schutzschicht, die Leitschicht, eine Isolationsschicht und die Orientierungsschicht. Dabei ist vor allem die Herstellung der Leitschicht arbeits- und zeitaufwendig, denn man muß die Schicht erst in einem CVD- oder in einem Sputterverfahren erzeugen und dann in einem Ätzprozeß strukturieren.

Natürlich könnte man auch ohne eine gesonderte Orientierungsschicht auskommen, nämlich dann, wenn man der Flüssigkristallschicht gewisse oberflächenaktive Stoffe hinzufügt oder auf die Leit- bzw. Schutzschicht in bestimmter Weise einwirkt. Versuche in dieser Richtung

Les 1 Nem/10.1.1980

haben jedoch, wie die Erfahrung gezeigt hat, zu keinen befriedigenden Ergebnissen geführt.

Der Erfindung liegt daher die Aufgabe zugrunde, den Silanen eine weitere Klasse von Verbindungen zur Seite zu stellen, aus denen sich genauso einfach Orientierungsschichten mit ähnlich gutem Ausrichtvermögen erzeugen lassen und die darüber hinaus ohne sonderlichen Mehraufwand zu transparenten Leitschichten umgewandelt werden können. Zur Lösung dieser Aufgabe wird erfindungsgemäß ein Verfahren mit den Merkmalen des Patentanspruchs 1 vorgeschlagen.

Zinnorganische Verbindungen sind bereits in großer Zahl synthetisiert und erforscht (vergl. hierzu beispielsweise "Chimica" 23 (1969) 313 oder Gmelin "Handbuch der anorganischen Chemie", Ergänzungswerk zur 8. Auflage, Band 26, Teil I bis VI, Springer-Verlag Berlin, Heidelberg, New York, 1975 bis 1978). Sie werden auch schon seit langem technisch genutzt, beispielsweise als Stabilisatoren von Kunststoffen, als Katalysatoren für die Polymerisation verschiedener Monomere, als Bio- und Fungizide oder als Schutzanstriche. An einen Einsatz auf dem Gebiet elektrooptischer Displays hatte man allerdings noch nicht gedacht.

Die vorgeschlagenen Verbindungen verfügen über ein ausgezeichnetes Haftvermögen, das dem der Silanschichten zumindest ebenbürtig ist. Hierfür sind folgende Vorgänge an der Substratoberfläche verantwortlich: Die Abgangsgruppen werden durch Reaktion mit freien SiOH- oder In-OH-Gruppen substituiert. Dabei spalten sich flüchtige Verbindungen ab, und es entstehen Si-O-Sn- bzw. In-O-Sn-Brücken, die die aufgebrachte Schicht auf der Unterlage dauerhaft fixieren. Die Schicht selbst ist, wie sich herausgestellt hat, sehr beständig; vermutlich bilden sich auch Sn-O-Sn-Polymere aus.

Die Orientierungswirkung von erfindungsgemäßen Schichten hängt stark von der gewählten Einzelverbindung und der zu orientierenden Flüssigkristallsubstanz ab. So werden etwa Cyanobiphenyle durch Alkyl-Zinn-Verbindungen mit unterschiedlichen Kettenlängen durchwegs homöotrop orientiert, während Phenylcyclohexane nur durch langkettige Alkyl-Zinn-Verbindungen eine plattensenkrechte Vorzugsrichtung erhalten. Aromatische Ester sowie Gemische aus Cyanobiphenylen und Phenylpyrimidinen verhalten sich weniger extrem, sie sind bei Alkyl-Zinn-Verbindungen mit kurzen oder mittellangen organischen Resten verkippt planar ausgerichtet und werden verkippt homöotrop eingestellt, wenn die C-Kette im organischen Rest mindestens 7 Glieder hat. Allgemein gilt, daß Mono-n-Alkyl-Zinn-Verbindungen schon mit kürzeren Kettenlängen plattensenkrecht ausrichten als Di-n-Alkyl-Zinn-Verbindungen. Dieser Unterschied tritt bei Cyanobiphenylen praktisch nicht in Erscheinung, zeigt sich recht deutlich bei aromatischen Estern sowie Gemischen aus Cyanobiphenylen und Phenylpyrimidinen und ist bei Phenylcyclohexanen sehr ausgeprägt.

Hauptursache für die beobachteten Orientierungsphänomene sind sicherlich sterische Effekte an der Grenzfläche Orientierungsschicht/Flüssigkristall. Von der Schicht gehen mehr oder weniger lange organische Gruppen aus, zwischen denen die angrenzenden Flüssigkristallmoleküle - entweder auf ganzer Länge oder mit räumlich passenden Teilstücken - eingelagert und verankert werden. Hat die Schicht kurzkettige Gruppen, so schieben sich gewöhnlich die Cyanogruppen der Flüssigkristallmoleküle dazwischen, bei mittellangen Ketten sind es vorzugsweise die Alkyl- bzw. Alkoxy-Gruppen der Flüssigkristallmoleküle, und lange C-Gruppen nehmen die kompletten Moleküle auf. Moleküle mit einer sterisch anspruchsvollen Struktur, etwa die Phenylcyclohexyle mit ihrer "sperrigen" Cyclohexylgruppe, finden erst bei extrem

langen Resten ausreichend Platz. Damit erklärt sich der Ausnahmecharakter von Flüssigkristallsystemen auf der Basis von Phenylcyclohexanen. Auch das unterschiedliche Verhalten von Mono- und Di-n-Alkyl-Zinn-Verbindungen wird plausibel, wenn man sterische Phänomene zugrundelegt: Bei einer Di-n-Alkyl-Verbindung beträgt der Winkel zwischen den beiden organischen Resten, bedingt durch die tetraedrische Struktur am zentralen Zinnatom, etwa 120°. Sind die Alkylketten kurz, so beeinflussen sie sich noch nicht. Der sterische Einfluß nimmt jedoch mit steigender Kettenlänge zu und kann nur bei einer hohen Zahl von C-Atomen durch die größere Beweglichkeit der Ketten ausgeglichen werden. Dementsprechend orientieren nur sehr kurze oder sehr lange Molekülketten exakt homöotrop. Bei Mono-n-Alkyl-Verbindungen bewirkt die Tetraederstruktur am Zinnatom, daß die organischen Gruppen praktisch senkrecht zur Substratoberfläche stehen. Die Gruppen haben außerdem einen größeren Abstand zueinander, so daß insgesamt der sterische Einfluß, der den Anstellwinkel verkleinert, geringer ist.

Die Anstellwinkel der Flüssigkristallmoleküle, die bei unbehandelten Schichten zwischen 20° und 90° liegen, lassen sich durch thermische und/oder mechanische Nachbehandlungen der Orientierungsschicht in relativ weiten Grenzen variieren und bei Bedarf auch auf Werte unter 20° verringern. Erhitzt man beispielsweise die Schicht auf 260°, so nimmt normalerweise der Anstellwinkel zu. Diese Tendenz läßt vermuten, daß erst bei diesen Temperaturen die Reaktion auf der Substratoberfläche vollständig abgeschlossen ist und die reaktiven Abgangsgruppen, die eine planare Orientierung fördern, gänzlich verschwunden sind. Für diese Vermutung spricht auch die Tatsache, daß eine auf 260° erhitzte Orientierungsschicht die Leitfähigkeit der Flüssigkristallsubstanz nicht mehr erhöht, also keine Ionen mehr abgeben kann. Tempert man bei deutlich höheren Temperaturen, etwa bei 520°C, so entsteht eine spezielle planare Orientierung, bei der die Beschaffenheit des Schichtenträgers die Richtung des Flüssigkristalldirektors bestimmt. Offensichtlich verliert die zinnorganische Verbindung unter einer derartigen thermischen Belastung ihre organischen Reste und wird zu einem Zinnoxid ohne eigene Orientierungskraft umgewandelt. Die Flüssigkristalltextur wird hiernach im wesentlichen durch die Oberflächenstruktur der Zinnoxidunterlage festgelegt.

Besonders kleine Kippwinkel, wie sie beispielsweise bei multiplexbaren Drehzellen benötigt werden, kommen zustande, wenn man eine verkippt planar orientierende Schicht reibt.

Besonders attraktiv sind die vorgeschlagenen Verbindungen deshalb, weil sie nicht nur über wertvolle Orientierungseigenschaften verfügen, sondern auch mühelos in Leitschichten umgewandelt werden können. Man braucht hierzu lediglich die Ausgangsverbindung mit einem passenden Zusatz zu vermischen, das Gemisch aufzutragen und anschließend durchzuoxidieren. Auf diese Weise lassen sich Leit- und Orientierungsschichten erzeugen, die in ihrer Zusammensetzung und auch in ihrer Fertigung sehr ähnlich sind; dadurch wird die Plattenbeschichtung insgesamt einfacher.

Weitere vorteilhafte Ausgestaltungen und Weiterbildungen der Erfindung sind Gegenstand zusätzlicher Ansprüche.

Der Lösungsvorschlag soll nun anhand einer Flüssigkristallanzeige, die in der beigefügten Figur in einem etwas schematisierten Seitenschnitt dargestellt ist, näher erläutert werden.

Die Flüssigkristallanzeige der Figur arbeitet mit dem sog. "Guest-Host"-Effekt. Die Zelle enthält im einzelnen eine vordere Trägerplatte 1, eine hintere Trägerplatte 2 sowie einen Reflektor 3. Die beiden Trägerplatten sind durch einen Rahmen 4 dicht miteinander verbunden und tragen auf ihren einander gegenüberliegenden Flächen jeweils einen elektrisch leitenden Belag (Vorderelektrode aus getrennt ansteuerbaren Segmentelektroden 6, durchgehende Rückelektrode 7) sowie eine homöotrop orientierende Schicht (Orientierungsschichten 8, 9). Die vom Rahmen und den beiden Substraten gebildete Kammer ist mit einer Flüssigkristallschicht 11 gefüllt. Diese Schicht besteht aus einem eutektischen Gemisch zweier Azoxyverbindungen ("N4" der Fa. Merck), dem eine chiral-nematische Substanz sowie ein pleochroitischer Farbstoff zugesetzt sind. Die Schicht wird zwischen einem homöotropen "Aus"-Zustand und einem planar-cholesterischen "Ein"-Zustand geschaltet.

Die Orientierungsschicht, die im vorliegenden Fall ein n-Hexyl-Zinn-Trichlorid ist, läßt sich folgendermaßen rationell erzeugen: Zunächst löst man die zinnorganische Verbindung in einem organischen Lösungsmittel wie Toluol; dabei sollten die Mengenverhältnisse so gewählt werden, daß eine 0,2 bis 5%ige Lösung entsteht. Anschließend taucht man die Trägerplatte, die ansonsten bereits fertig beschichtet ist, wenige Minuten in die Lösung ein und zieht sie dann mit gleichmäßiger Geschwindigkeit, etwa mit 1 cm/sec., wieder heraus. Wollte man ganz sicher gehen, daß dabei keine vorzeitige Hydrolyse stattfindet, könnte man den Tauchvorgang in einer geeigneten Gasatmosphäre, beispielsweise Stickstoff, durchführen. Es genügt hierzu, das Tauchgefäß mit einem laminaren Gasstrom zu umspülen. Nach dem Tauchen sollte das Substrat bei 100 bis 120°C 20 bis 40 Minuten lang getrocknet werden.

Die Herstellung der Ausgangsverbindung für die Orientierungsschicht ist entweder aus der Literatur bekannt oder kann ohne weiteres auf analoge Weise erfolgen. Im folgenden soll daher nur die Synthese zweier repräsentativer Verbindungsgruppen, nämlich der Alkyl-Zinn-Chloride und der Alkyl-Zinn-Alkoxide, kurz skizziert werden.

Alkyl-Zinn-Chloride

Zunächst stellt man Tetraalkyl-Zinn-Verbindungen über das sogenannte "Grignard-Reagenz" her:

$$4\ RMgBr + SnCl_4 \longrightarrow R_4Sn + MgBrCl$$

$$R = n\text{-}C_2H_5,\ n\text{-}C_3H_7 \text{ bis } n\text{-}C_{12}H_{25} \text{ und } n\text{-}C_{16}H_{33}$$

Diese Verbindung wird anschließend zu Alkyl-Zinn-Chlor-Verbindungen mit den verschiedensten Substitutionsgraden komproportioniert:

$$3\ R_4Sn + SnCl_4 \longrightarrow 4\ R_3SnCl$$

$$R_4Sn + SnCl_4 \longrightarrow 2\ R_2SnCl_2$$

$$R_4Sn + 3\ SnCl_4 \longrightarrow 4\ RSnCl_3$$

Wenn man bei dieser Umsetzung die Reaktionszeit und die Temperatur variiert, so kann man - bei gleichbleibender Stöchiometrie - die Reaktion so steuern, daß die gewünschten Produkte $R_2SnCl_2$ und $RSnCl_3$ zu ungefähr gleichen Teilen als Hauptprodukte neben sehr wenig $R_3SnCl$ entstehen. Bei niedrigen Temperaturen bildet sich nach kurzer Reaktionszeit ein Gemisch aus Mono-, Di- und Trichlorid, das beim weiteren Erwärmen in einem komplexen Reaktionsverlauf zu den endgültigen Produkten weiter reagiert.

$$R_4Sn + SnCl_4 \longrightarrow R_3SnCl + RSnCl_3$$

$$R_4Sn + 2SnCl_4 \longrightarrow R_2SnCl_2 + 2RSnCl_3$$

$$RSnCl_3 + R_4Sn \longrightarrow R_2SnCl_2 + R_3SnCl$$
$$R_3SnCl + RSnCl_3 \longrightarrow 2\ R_2SnCl_2$$
$$R_3SnCl + SnCl_4 \longrightarrow R_2SnCl_2 + RSnCl_3$$
$$R_2SnCl_2 + SnCl_4 \longrightarrow 2\ RSnCl_3$$

Durch Addition der obigen Reaktionsgleichungen erhält man die Reaktionsgleichung für die beobachtete Bildung von $R_2SnCl_2$ und $RSnCl_3$ als Hauptprodukte.

$$3\ R_4Sn + 5\ SnCl_4 \longrightarrow 4\ R_2SnCl_2 + 4\ RSnCl_3$$

Durch Destillation lassen sich die verschieden substituierten Produkte trennen.

Alkyl-Zinn-Alkoxide

Dialkyl-Zinn-Diethoxide werden durch Umsetzung des Dialkyl-Zinn-Dichlorids mit Natriumethylat in absolutem Ethanol bei 0°C dargestellt.

$$R_2SnCl_2 + 2\ NaOC_2H_5 \longrightarrow R_2Sn(OC_2H_5)_2 + 2\ NaCl$$

Zur Darstellung der Mono-Alkyl-Zinn-Triethoxide werden die Monoalkyl-Zinn-Trichloride mit Natriumethylat in absolutem Ethanol bei 0°C umgesetzt.

$$RSnCl_3 + 3\ NaOC_2H_5 \not\longrightarrow RSn(OC_2H_5)_3 + 3\ NaCl$$

Alkyl-Zinn-Ethoxide mit verschiedenen Substitutionsgraden werden über Alkyl-Zinn-Diäthylamine synthetisiert.

$$RSnCl_3 + 3\ LiNR'_2 \longrightarrow RSn(NR'_2)_3 + 3\ LiCl$$
$$RSn(NR'_2)_3 + 3\ R''OH \longrightarrow RSn(OR'')_3 + 3\ HNR'_2$$

und

$$R_2SnCl_2 + 2\ LiNR'_2 \longrightarrow R_2Sn(NR'_2)_2 + 2\ LiCl$$
$$R_2Sn(NR'_2)_2 + 2\ R'OH \longrightarrow R_2Sn(OR')_2 + 2\ HNR'_2$$

Welche unter den vielen zinnorganischen Verbindungen im

konkreten Fall auszuwählen ist, hängt vor allem davon ab, welches Flüssigkristallgemisch zu orientieren ist und welcher Anstellwinkel dabei hervorgerufen werden soll. Um einen Einblick in die Vielfalt der möglichen Orientierungseffekte zu geben, wird im folgenden zusammengestellt, wie Alkyl-Zinn-Chloride und Alkyl-Zinn-Alkoxide die derzeit üblichen Flüssigkristallsubstanzen ausrichten.

Orientierung bei den Flüssigkristallsubstanzen

| Verbindung | ZLI 1132 | ROTN 132 | ROTN 403 | ROTN 570 |
|---|---|---|---|---|
| $(CH_3)_2SnCl_2$ | = | = | = 90° | ⊥ |
| $(C_2H_5)_2SnCl_2$ | = | = 90° | = 90° | = 90° |
| $(C_3H_7)_2SnCl_2$ | = | = 90° | = 90° | ⊥ |
| $(C_4H_9)_2SnCl_2$ | = | ⊥ St | = 90° | ⊥ |
| $(C_5H_{11})_2SnCl_2$ | = | = 90° | = 90° | ⊥ < |
| $(C_6H_{13})_2SnCl_2$ | = | = < | = 90° | ⊥ < |
| $(C_7H_{15})_2SnCl_2$ | = | = < | = | ⊥ |
| $(C_8H_{17})_2SnCl_2$ | = | ⊥ | ⊥ St | ⊥ |
| $(C_9H_{19})_2SnCl_2$ | = | ⊥ | = | ⊥ |
| $(C_{10}H_{21})_2SnCl_2$ | = | ⊥ | ⊥ | ⊥ |
| $(C_{21}H_{23})_2SnCl_2$ | = | ⊥ | ⊥ | ⊥ < |
| $(C_{12}H_{25})_2SnCl_2$ | ⊥ < | ⊥ | ⊥ | ⊥ < |
| $(C_{16}H_{33})_2SnCl_2$ | ⊥ | ⊥ | ⊥ | ⊥ |
| $CH_3SnCl_3$ | = | = 90° | = 90° | ⊥ |
| $C_2H_5SnCl_3$ | = | = oV | = 90° | ⊥ |
| $C_3H_7SnCl_3$ | = | = 90° | = 90° | ⊥ |
| $C_4H_9SnCl_3$ | = 90° | = 90° | = 90° | ⊥ < |
| $C_5H_{11}SnCl_3$ | = 90° | = 90° | = 90° | ⊥ < |
| $C_6H_{13}SnCl_3$ | = 90° | ⊥ | ⊥ | ⊥ |
| $C_7H_{15}SnCl_3$ | ⊥ | ⊥ | ⊥ | ⊥ < |
| $C_8H_{17}SnCl_3$ | ⊥ | ⊥ < | ⊥ | ⊥ < |
| $C_9H_{19}SnCl_3$ | ⊥ | ⊥ < | ⊥ | ⊥ < |

| Verbindung | ZLI 1132 | ROTN 132 | ROTN 403 | ROTN 570 |
|---|---|---|---|---|
| $C_{10}H_{21}SnCl_3$ | ⊥ | ⊥ < | ⊥ | ⊥ |
| $C_{11}H_{23}SnCl_3$ | ⊥ | ⊥ | ⊥ | ⊥ |
| $C_{12}H_{25}SnCl_3$ | ⊥ | ⊥ | ⊥ | ⊥ |
| $C_{16}H_{33}SnCl_3$ | ⊥ | ⊥ | ⊥ | ⊥ |
| $(C_4H_9)_2Sn(OEt)_2$ | = 90° | = | = 90° | = 90° |
| $C_4H_9Sn(OEt)_3$ | = St | ⊥ | ⊥ | ⊥ |
| $(C_7H_{15})_2Sn(OEt)_2$ | = St | ⊥ | ⊥ | ⊥ |

In der Tabelle bedeuten

| | | |
|---|---|---|
| = | : | planare Orientierung |
| ⊥ | : | homöotrope Orientierung |
| < | : | verkippte Orientierung |
| oV | : | Orientierung ohne eindeutige Vorzugsrichtung |
| St | : | lichtstreuende Orientierung |
| = 90° | : | planare Orientierung, bei der die Vorzugsrichtung über der Leitschicht senkrecht zur Vorzugsrichtung über dem unbeschichteten Substrat steht. |

Die vermessenen Flüssigkristallgemische sind unter den genannten Handelsbezeichnungen erhältlich. Die Substanz ZLI 1132 ist ein eutektisches Gemisch aus Cyanophenylcyclohexanen der Fa. Merck, RO TN 132 ist ein eutektisches Gemisch aus Biphenylestern der Fa. Hoffmann-La Roche, die auch die Flüssigkristallsysteme RO TN 403 (eutektisches Gemisch aus Cyanobiphenylen und Phenylpyrimidinen) und RO TN 570 (eutektisches Gemisch aus Cyanobiphenylen) anbietet. Die Flüssigkristallzellen, an denen die Messungen vorgenommen werden, waren folgendermaßen präpariert: Die beiden Trägerplatten bestanden aus Glas und trugen aufgesputterte, 0,15 µm dicke $InO_3$-$SnO_2$-Leitschichten, die bei 520° getempert und mit halbkonzentrierter Salz- und Salpetersäure (Mischungsverhältnis 30:1) strukturiert worden waren. Die Orientierungsschichten waren in einem Tauchverfahren aufgebracht worden und hatten eine Dicke zwischen 0,02 und 0,1 µm. Beide Platten waren in einem Abstand von 12 µm miteinander verklebt.

Die Erfindung beschränkt sich nicht auf die detailliert behandelten Ausführungsbeispiele. So kommen als Orientierungsschichten auch zinnorganische Verbindungen mit anderen reaktiven Abgangsgruppen als Chlor und Alkoholaten und anderen organischen Resten als Alkylen infrage. Davon abgesehen ließe sich die Orientierungsschicht auch auf andere Weise als in einer Tauchtechnik aufbringen, etwa durch sprühen, schleudern oder rollen; denkbar wäre auch ein CVD-Verfahren. Im übrigen bleibt es dem Fachmann unbenommen, in Fällen, in denen es auf ganz bestimmte Kippwinkel ankommt, auch noch der Unterlage der Orientierungsschicht ein definiertes Profil zu geben.

1 Figur
11 Ansprüche

Patentansprüche

1. Verfahren zur Herstellung einer Flüssigkristallanzeige mit zwei Trägerplatten, die eine Flüssigkristallschicht zwischen sich einschließen und auf ihren einander zugewandten Seiten jeweils einen elektrisch leitenden Belag (Elektrode) und darüber eine Orientierungsschicht tragen, wobei die Orientierungsschicht aus einer elementorganischen Verbindung des Typs

$R_nMX_{4-n}$

(R = organischer Rest, M = vierwertiges Element, X = reaktive Abgangsgruppe und n = 1,2 oder 3) erzeugt wird, dadurch gekennzeichnet, daß das vierwertige Element Zinn ist.

2. Verfahren nach Anspruch 1, dadurch gekennzeichnet, daß zunächst die zinnorganische Verbindung in einem organischen Lösungsmittel gelöst wird, daß dann die Lösung auf die Trägerplatte aufgetragen und anschließend erwärmt wird.

3. Verfahren nach Anspruch 2, dadurch gekennzeichnet, daß die Lösung durch Eintauchen der Trägerplatte aufgetragen wird und anschließend bei Temperaturen zwischen 100 und 120 Grad zwischen 20 und 40 Minuten lang erwärmt wird.

4. Verfahren nach einem der Ansprüche 1 bis 3, dadurch gekennzeichnet, daß der organische Rest ein Alkyl, Alkylamid, Phenyl, Biphenyl, Terphenyl, Cyanophenyl, Cyanobiphenyl, Cyanoterphenyl, Cyclohexyl, Bicyclohexyl, Phenylcyclohexyl, Biphenylcyclohexyl, Cyanobiphenylcyclohexyl, Phenylpyrimidin oder Cyanophenylpyrimidin ist.

5. Verfahren nach einem der Ansprüche 1 bis 4, dadurch gekennzeichnet, daß die

reaktive Abgangsgruppe Chlor, Brom oder Jod ist.

6. Verfahren nach einem der Ansprüche 1 bis 4, dadurch gekennzeichnet, daß die reaktive Abgangsgruppe ein Alkoholat des Typs OR' (R' = Alkyl oder Aryl) ist.

7. Verfahren nach einem der Ansprüche 1 bis 6, dadurch gekennzeichnet, daß die zinnorganische Verbindung ein Mono-n-Alkyl-Zinn-Trichlorid oder ein Di-n-Alkyl-Zinn-Dichlorid ist.

8. Verfahren nach einem der Ansprüche 1 bis 6, dadurch gekennzeichnet, daß die zinnorganische Verbindung ein Di-n-Alkyl-Zinn-Diethoxid oder ein Mono-n-Alkyl-Zinn-Triethoxid ist.

9. Verfahren nach einem der Ansprüche 1 bis 8, dadurch gekennzeichnet, daß vor der Erzeugung der Orientierungsschicht die Elektrode auf folgende Weise gebildet wird: zunächst wird eine zinnorganische Verbindung des gleichen Typs mit einem oxidfähigen Zusatz versehen, dessen Oxid die elektrische Leitfähigkeit von Zinnoxid erhöht, anschließend wird aus dem Gemisch auf der Trägerplatte eine Schicht erzeugt und schließlich wird die Schicht erhitzt, derart, daß die zinnorganische Verbindung und der Zusatz in ihre Oxide überführt werden.

10. Verfahren nach Anspruch 9, dadurch gekennzeichnet, daß der Zusatz Indium, Antimon, Cadmium oder eine Seltene Erde der formellen Wertigkeit +3 oder +5 ist.

11. Verfahren nach Anspruch 9 oder 10, dadurch gekennzeichnet, daß für die Elektrode und die Orientierungsschicht gleiche zinnorganische Ver-

bindungen verwendet werden.

1/1

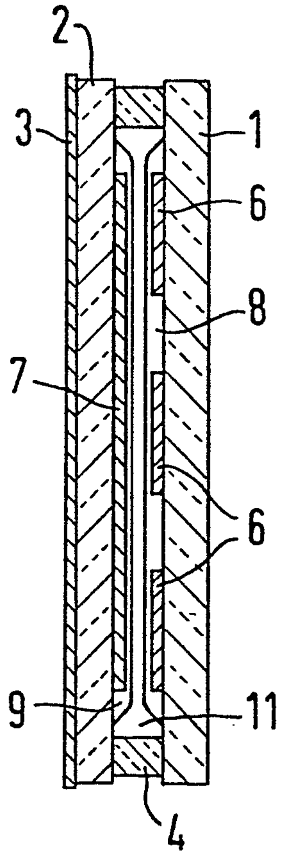

0032397

Europäisches Patentamt

# EUROPÄISCHER RECHERCHENBERICHT

Nummer der Anmeldung

EP 81100168.4

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| D | DE - A - 2 238 429 (OLIVETTI)<br>+ Seite 16, Zeilen 1-14; Seite 17, Zeile 11 - Seite 18, Zeile 4 +<br>---- | 3-5 | G 02 F 1/133 |
| | | | RECHERCHIERTE SACHGEBIETE (Int Cl. ³) |
| | | | G 02 F 1/00<br>G 09 F 9/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 07-04-1981 | BENISCHKA |